# EUROPÄISCHE PATENTSCHRIFT

(11) **EP 2 611 682 B1**
(45) Veröffentlichungstag und Bekanntmachung des Hinweises auf die Patenterteilung: **08.03.2017**
(21) Anmeldenummer: 11737900.8
(22) Anmeldetag: 20.07.2011
(51) Int. Cl.: B62M 6/55

(54) **MONTAGEADAPTER FÜR ELEKTROFAHRRAD**
MOUNTING ADAPTER FOR AN ELECTRIC CYCLE
ADAPTATEUR DE MONTAGE POUR BICYCLETTE ÉLECTRIQUE

(30) Priorität: 31.08.2010 AT 53810 U
(43) Veröffentlichungstag der Anmeldung: 10.07.2013
(73) Patentinhaber: EGO Sports GmbH, 5301 Eugendorf (AT)
(72) Erfinder: Preining, Daniel, 5020 Salzburg (AT); Eitschberger, Matthias, 71672 Marbach (DE)
(74) Vertreter: Molnia, David
(86) Internationale Anmeldenummer: PCT/EP2011/003649
(87) Internationale Veröffentlichungsnummer: WO 2012/028227

(56) Entgegenhaltungen:
- DE-A1- 3 117 415
- DE-A1-102008 007 710
- JP-A- 9 011 970
- US-B1- 6 352 131
- US-B1- 6 412 800

## Beschreibung

Die Erfindung betrifft ein Montageset mit einem Adapter und einem Adapter, der es ermöglicht, einen Elektromotor an nahezu jedes Fahrzeug, vornehmlich Fahrräder, nachträglich anzubauen.

### HINTERGRUND DER ERFINDUNG

Gegenwärtig befinden sich verschiedene Modelle elektrisch angetriebener Fahrräder auf dem Markt, die allerdings alle werksseitig fest montierte Elektroantriebseinheiten aufweisen. Diese Antriebseinheiten unterstützen oder geben einen 100%igen Vortrieb. Außerdem sind so genannte Nachrüstsätze für Elektroantriebe im Markt erhältlich, die als Umrüstsatz eines Fahrrads zu einem Pedelec ermöglichen. Diese Nach- bzw. Umrüstsätze erfordern erheblichen Aufwand der Rüstung, dessen Reversibilität mit einem ungern in Kauf genommenen Montageaufwand verbunden ist.

Einige Beispiele elektrischer, an Fahrrädern angebrachter Vortriebsvorrichtungen finden sich in den folgenden Dokumenten: US-A-4,871,042, GB-A-2.249.529, US-A-5,242,028, EP-A-0.755.854, EP-A-0.728.663 so wie EP-A-0.776.818 und EP 1 462 355 A1.

Aus der JP 9011970 A ist ein Montageset mit den Merkmalen des Oberbegriffes des Anspruchs 1 bekannt.

Die JP 9 011970 A zeigt einen Kasten mit einem elektrischen Motor, einem Leistungsübertragungsmittel, wobei ein Hilfsleistungsgerät in dem Kasten mit einem drehbaren hohlen Schaft montiert ist, um ein Moment von dem Hilfsleistungsgerät zu einem Ritzel zu übertragen.

Aufgabe der vorliegenden Erfindung ist es, eine Befestigungsmöglichkeit für einen Elektromotor an ein Fahrrad bereitzustellen, die es erlaubt, ohne großen Aufwand und nahezu komplett reversibel diese Befestigungsmöglichkeit nach Belieben (z. B. für eine sportliche Fahrradtour) wieder zu demontieren und die eine höhere Stabilität bewirkt.

Die Aufgabe wird durch die unabhängigen Ansprüche gelöst. Vorteilhafte Weiterbildungen sind in den Unteransprüchen definiert.

### DETAILIERTE BESCHREIBUNG DER ERFINDUNG

Die Aufgabe wird insbesondere gelöst durch ein Montageset zur Montage eines Elektromotors an ein einspuriges oder mehrspuriges Fahrrad gemäß Anspruch 1, das einen Adapter (1) zur Befestigung des Elektromotors aufweist der an mindestens einer Seite eines Tretlagerrohrs und mindestens einem Punkt eines Unterrohrs befestigbar ist, wobei der Adapter (1) Befestigungslöcher (62) aufweist, über welche der Adapter (1) an mindestens einer Seite des Tretlagerrohrs mittels Schrauben an einer Aufnahme (6) befestigbar ist und wobei der Adapter (1) mittels mindestens eines im Unterrohr (11) vorhandenen Gewindes (18) oder einer vorhandenen Dämpferaufnahme (72) an das Unterrohr (11) befestigbar ist.

Bevorzugt weist der Adapter drei Befestigungslöcher auf, die gemäß der Abstände des International Standart Chainguard Mount (ISCG) jeweils voneinander beabstandet sind. Das Befestigungsloch ist bevorzugt eine Bohrung in einer Metallplatte des Adapters. Bevorzugt sind die Befestigungslöcher gekrümmte Langlöcher.

Der Adapter besteht bevorzugt aus drei Metallplatten, die U-förmig miteinander verbunden sind, besonders bevorzugt aus einem Metallblech, das auf der linken und rechten Seite nach oben gefaltet ist.

Das Tretlagerrohr ist das Rohr, indem sich das Tretlager befindet. Es wird auch als Tretlagermuffe oder Tretlagergehäuse bezeichnet.

Die Aufnahme ist bevorzugt eine am Fahrradrahmen bereits vorhandene Aufnahme z. B. für einen Kettenschutz. Bevorzugt ist sie eine ISCG Aufnahme. Bevorzugt weist die Aufnahme mindestens drei Gewinde zur Aufnahme von Schrauben auf.

Bevorzugt ist der Adapter an der linken oder rechten Seite (aus Sicht des Fahrradfahrers) an einer Aufnahme, besonders bevorzugt an beiden Seiten des Tretlägers an je einer Aufnahme mit Schrauben befestigbar.

Auf diese Weise ist der Adapter mit einfachem Werkzeug (Schraubendreher, Maulschlüssel, Inbusschlüssel) im Bereich des Tretlagers befestigbar und auch wieder leicht abnehmbar. Die Befestigung mittels Schrauben an einer ISCG Aufnahme des Fahrrads, die bereits dort fest vorhanden ist, ist zudem eine gegenüber dem Klemmen an das Tretlagerrohr mit Hilfe der Tretlagerhülse noch stabilere Befestigungsart. Durch die Befestigung des Adapters in der Nähe des Tretlagerrohrs wird auch eine Befestigung des schweren Elektromotors dort ermöglicht, wo idealerweise für ein optimales Fahrverhalten der Schwerpunkt eines Fahrrads liegen sollte, nämlich im Bereich des Tretlagers.

Der Adapter überträgt die auftretenden Kräfte bevorzugt hauptsächlich über den Tretlagerbereich des Rahmens. Er weist mindestens ein Loch mit mindestens dem Innendurchmesser des Innenlagerrohrs auf. Bevorzugt ist der Adapter mit Innenlagerhülsen für marktübliche Tretlagergehäusebreiten, z. B. 68 mm, 73 mm oder 83 mm, kompatibel.

In einem weiteren erfindungsgemäßen Montageset weist das Montageset zusätzlich mindestens eine Aufnahme (6) auf, wobei die Aufnahme (6) an eine Seite des Tretlagerrohrs klemmbar ist oder die Aufnahme (6) ein integraler Bestandteil einer Innenlagerhülse ist.

Auf diese Weise sind Fahrräder, die keine Aufnahme wie z. B. eine ISCG Aufnahme am Fahrrad aufweisen, mit einer Aufnahme nachrüstbar. So weisen die meisten Fahrräder auf der linken Seite des Tretlagers (aus Sicht des Fahrers) keine Aufnahmen auf, so dass hier eine Befestigung des Adapters mittels Schrauben an einer Aufnahme nicht ohne Zusatzmaßnahme am Fahrrad möglich ist.

Eine an eine Seite des Tretlagerrohrs klemmbar Aufnahme ist bevorzugt eine Metallplatte, die ein Loch mit dem Durchmesser des Innendurchmessers des Tretlagerrohrs aufweist, sowie eine oder mehrere, bevorzugt drei Löcher bevorzugt mit geschnittenen Gewinden, die um das Loch mit dem Innendurchmesser des Tretlagerrohrs bevorzugt gemäß dem Lochbild einer ISCG Aufnahme angeordnet sind. Dieses Metallplättchen ist bevorzugt außen rund, evtl. mit Ausbuchtungen dort, wo die Löcher mit den Gewinden angeordnet sind. Diese Aufnahme wird bevorzugt mit der Tretlagerhülse, die im eingeschraubten Zustand außen eine Schulter aufweist, an das Tretlagerrohr geklemmt.

Sofern die Aufnahme integraler Bestandteil einer Innenlagerhülse ist, weist die Innenlagerhülse bevorzugt eine noch breitere Schulter auf, in welche die Löcher mit den Gewinden angeordnet sind.

Der Adapter ist damit bevorzugt auf der rechten Seite an eine vorhandene ISCG Aufnahme schraubbar oder, falls keine ISCG Aufnahme vorhanden ist, mit einer dem Montageset beigefügten Aufnahme, d. h. eine mit dem Innenlager mitgeklemmte Aufnahme (ISCG Simulationsadapter) oder über eine spezielle Innenlagerhülse mit ausgeformter Aufnahmen. Auf der linken Seite erfolgt die Befestigung bevorzugt über eine mit dem Tretlager geklemmten Aufnahme (z. B. ISCG Simulationsadapter) oder mittels der speziellen Innenlagerhülse mit ausgeformter Aufnahme.

Bevorzugt ist die spezielle Innenlagerhülse mit Aufnahme zusammen mit einem Tretlager Teil des Montagesets. Das Innenlager, bevorzugt auch die Innenlagerachse, des Tretlagers weist bevorzugt eine auf das Montageset abgestimmte Länge-auf, um eine für die Motorantriebskette und die Ritzelpakete passende Kettenlinie zu gewährleisten und bevorzugt um Platz für den Motor zwischen den Kurbeln sicherzustellen.

In einem weiteren erfindungsgemäßen Montageset weist der Adapter (1) mindestens eine seitliche Trägerplatte (60) auf, die sich im eingebauten Zustand des Adapters (1) vom Tretlagerrohr seitlich entlang des Unterrohrs (11) erstreckt und an deren einen Endbereich die Befestigungslöcher (62) zur Befestigung an der Aufnahme (6) und an deren anderen Endbereich mindestens eine Befestigungsmöglichkeit für eine Befestigung am Unterrohr vorhanden sind.

Seitlich ist die Trägerplatte bevorzugt dann, wenn sie im Wesentlichen im am Fahrrad montierten Zustand senkrecht auf der Tretlagerachse steht und so weiter seitlich des Unterrohrs und parallel zu der durch das Rahmendreieck des Fahrrads aufgespannten Ebene verläuft. Die Trägerplatte ist bevorzugt eine Metallplatte.

Durch die seitliche Trägerplatte ist der Adapter an mindestens zwei Punkten des Fahrrads befestigbar. Einerseits am Tretlager und andererseits am Unterrohr. Dadurch, dass die Trägerplatte seitlich verläuft, wird bevorzugt eine Anpassung an verschiedene Unterrohrgeometrien sowie Steigungen oder Krümmungen ermöglicht.

Die Befestigung am Unterrohr erfolgt bevorzugt über eine Rahmenbefestigung, bevorzugt über eine an der Trägerplatte angeordnete Schelle, die das Unterrohr einklemmt. Diese ist variabel und passt für verschiedene Unterrohrdurchmesser und -profile.

Eine Befestigungsmöglichkeit ist z. B. ein Befestigungsloch oder eine Anbindung für eine Klemme. Bevorzugt weist der Adapter verschiedene Befestigungslöcher auf, so dass eine Befestigung an das Unterrohr an verschiedenen Punkten entlang des Unterrohrs ermöglicht ist.

In einem weiteren erfindungsgemäßen Montageset weist der Adapter (1) eine zweite seitliche Trägerplatte (60) auf, die der ersten seitlichen Trägerplatte (60) gegenüberliegt, und wobei die Trägerplatten (60) ein Lochbild aufweisen, das mindestens ein gegenüberliegendes Lochpaar, bestehend aus einem Befestigungsloch (16) der einen Trägerplatte (60) und einem Befestigungsloch (16) der anderen Trägerplatte (60), aufweist.

Die zweite seitliche Trägerplatte verläuft im eingebauten Zustand bevorzugt auf der anderen Seite des Tretlagers und des Unterrohrs als die erste Trägerplatte. Durch das Lochbildmuster der Trägerplatten sind Befestigungsmittel für das Unterrohr wie z.B. eine Klemmrahmenbefestigung oder Schrauben flexibel an den Adapter befestigbar und somit lassen sich verschiedenste Rahmengeometrien sowie Unterrohrkrümmungen bzw. Steigungen kompensieren. Bevorzugt weist mindestens eine Trägerplatte Befestigungslöcher in zwei übereinander angeordneten Reihen auf.

In einem weiteren erfindungsgemäßen Montageset ist der Adapter (1) mit durch das Lochpaar geführten gegenüberliegenden Schrauben (17) und mittels mindestens des im Unterrohr (11) vorhandenen Gewindes (18) sowie bevorzugt Distanzhülsen (19) an das Unterrohr (11) befestigbar.

Das Gewinde ist bevorzugt in einer Gewindehülse angebracht, die quer durch das Unterrohr verlegt bevorzugt eingeschweißt ist. Auf diese Weise ist keine Rahmenbefestigungskomponente wie z.B. eine Klammer notwendig sondern allein mit Hilfe der Schrauben und den Befestigungslöchern des Adapters wird der Adapter am Unterrohr befestigt. Dabei wird bevorzugt das vom Tretlager entferntere Ende des Hauptträgers direkt mit dem Unterrohr verschraubt.

Bevorzugt ist der Adapter mit durch das Lochpaar geführten gegenüberliegenden Schrauben an einer Dämpferaufnahme am Unterrohr befestigbar. Der Adapter weißt hierzu bevorzugt mindestens eine Ausbuchtung mindestens einer der Trägerplatten auf. Diese ist im eingebauten Zustand des Adapters bevorzugt innerhalb des Rahmendreiecks anordenbar und weist bevorzugt mindestens ein Loch für die Aufnahme einer Schraube auf. Bevorzugt wird die Ausbuchtung erst nachträglich als Lochblech an den Adapter geschraubt, besonders bevorzugt ist die Ausbuchtung integral an mindestens einer Trägerplatte ausgeformt. Eine Dämpferaufnahme ist z. B. ein Flansch an der oberseite des Unterrohrs, an welchem üblicherweise ein Ende eines Dämpfers für eine Hinterradfederung fixiert wird.

Alternativ zur Befestigung des Adapters an mindestens einer Seite des Tretlagers ist der Adapter bevorzugt an der rechten und linken Seite einer Dämpferaufnahme mittels Schrauben befestigbar und am Unterrohr nahe des Tretlagers ist der Montageadapter mittels einer Klemmschelle oder einer dort im Unterrohr integrierten Gewindehülse anschraubbar. Auf diese Weise ist durch die Nutzung der schon vorhandenen stabilen und leicht erreichbaren Befestigungspunkte der Dämpferaufnahme eine in etwa ebenso stabile Befestigung des Adapters am Rahmen möglich.
In einem weiteren erfindungsgemäßen Montageset umfasst das Montageset zusätzlich eine Batteriehalterung (56), die an den Adapter (1) befestigbar ist, wobei die Batteriehalterung (56) im befestigten Zustand zusammen mit dem Adapter (1) das Unterrohr (11) teilweise umschließt.

Die Batteriehaltung besteht bevorzugt aus einer oder mehreren Klammern, die einerseits am Batteriegehäuse befestigt sind und andererseits über Schrauben an dem Adapter befestigbar sind. Die Klammern sind bevorzugt U-förmig und weisen bevorzugt Längsschlitze auf, so dass die Batterie in der Höhe positionierbar ist. Entlang des Unterrohrs ist die Batterie durch einen Längsschlitz der Batteriehalterung nach oben und unten positionierbar.

Auf diese Weise ist eine Batterie ohne großen Aufwand an dem Fahrrad montierbar. Die Batteriehalterung nutzt dabei vorhandene Anbindungsmöglichkeiten am Adapter. Folglich müssen für die Batteriehalterung keine extra Befestigungspunkte am Rahmen vorgesehen werden. Weiterhin ist die Befestigung der Batterie sehr stabil, da die Stabilität des Adapters auch auf die Batteriehalterung übertragen wird.

In einem weiteren erfindungsgemäßen Montageset ist an den Adapter (1) eine Motorhalterung (3) variabel, bevorzugt entlang mindestens zweier Achsen verschiebbar und/oder rotierbar befestigbar.

Die Motorhalterung ist bevorzugt zur Aufnahme eines Motors eingerichtet. Bevorzugt ist die Motorhalterung an den Adapter durch vier Schrauben anbringbar und auch wieder abnehmbar. Hierdurch ist der Motor schnell demontierbar, so dass das montierte Montageset auch nur in Teilen demontiert werden kann, wenn keine komplette Demontage gewünscht ist.

Die Verschiebbarkeit bzw. Rotierbarkeit der Motorhalterung erlaubt das Ausrichten der Motorhalterung am Adapter, um eine optimale Kettenlinie einstellen zu können und um den Motor je nach Rahmenform variabel positionieren zu können. Bevorzugt ist die Motorhalterung am Adapter in allen Achsen verstellbar.

In einem weiteren erfindungsgemäßen Montageset weist der Adapter (1) die Motorhalterung (3) auf, die über Schrauben an den Adapter (1) schnell montierbar und auch demontierbar ist.

In einem weiteren erfindungsgemäßen Montageset weist die Motorhalterung (3) einen Befestigungspunkt für einen Motorkettenspanner (37) auf.

Der Motorkettenspanner ist bevorzugt ein kleines Kettenritzel das über einen gefedert gelagerten Arm an dem Befestigungspunkt für den Motorkettenspanner mit der Motorhalterung verbunden ist. Mit dem Motorkettenspanner ist die Antriebskette spannbar.

In einem weiteren erfindungsgemäßen Montageset weist die Motorhalterung (3) einen Kettenschutz (9) auf.

Durch den Kettenschutz, bevorzugt ein Kettenabdeckblech, werden Gegenstände von der rotierenden Kette bzw. dem rotierenden Antriebszahnriemen ferngehalten.

In einem weiteren erfindungsgemäßen Montageset weist die Motorhalterung (3) einen Motorcontroller (43) auf.

Der Motorcontroller ist bevorzugt eingerichtet, den Motor zu regeln und diesem Strom von der Batterie zuzuführen. Durch die Befestigung des Motorcontrollers in an der Motorhalterung sind Motor und Controller nicht weit voneinander entfernt und es müssen keine langen Kabel verlegt werden.

In einem weiteren erfindungsgemäßen Montageset weist der Adapter (1) ein Verbindungsplättchen auf, an dem ein Kettenführungsrad (22) befestigbar ist, wobei das Verbindungsplättchen (21) mindestens ein Langloch (23) aufweist, über welches das Kettenführungsrad (22) mittels mindestens einer Schraube (24) an dem Adapter (1) befestigbar und in mindestens einer Richtung justierbar ist.

Bevorzugt ist das Kettenführungsrad per Gummipulley an dem Verbindungsplättchen montiert und je nach Kettenblattgröße anpassbar.

Auf diese Weise ist ein zusätzliches bevorzugt unteres Kettenführungsrad am Adapter befestigbar, so dass eine optimale Kettenspannung und eine optimale Kettenführung einstellbar ist. Damit wird die Wahrscheinlichkeit des Abspringens der Ritzelpaketkette vermindert.

In einem weiteren erfindungsgemäßen Montageset weist das Montageset einen Kettenblattadapter (25) auf, der an einen Freilauf (26), welcher den Kettenblattadapter (25) von einer Tretkurbel (30) in einer Drehrichtung entkoppelt, befestigbar ist und an den mindestens ein Kettenblatt (27, 28) für eine Antriebskette zu einem Hinterrad eines Fahrrads und ein Motorkettenblatt (5) für eine Antriebskette zu einem Motor (2) befestigbar sind.

Der Kettenblattadapter ist bevorzugt eine ringförmige Scheibe mit einem ersten Ring von mindestens drei bevorzugt vier oder mehr Löchern, die für die Montage des Freilaufs bestimmt sind und einen zweiten Ring von mindestens drei, bevorzugt vier oder mehr Löchern, die für die Montage von Kettenritzeln bestimmt sind. Bevorzugt sind die Löcher des zweiten Rings in Ausbuchtungen des Kettenblattadapters angeordnet. Die Tretkurbel ist bevorzugt mittels eines Gewindes in den Freilauf schraubbar. Dieser weist bevorzugt einen Ring mit drei, bevorzugt vier oder mehr, Löchern für die Montage des Kettenblattadapters auf. An dem Kettenblattadapter sind bevorzugt Kettenblätter mit 104 mm Lochkreis (z. B. 32-46 Zähne) wie auch Kettenblätter mit 20 bis 24, z. B. 22 Zähnen, und kleinen Lochkreis (58 mm, 64 mm) befestigbar. Bevorzugt ist auch der Freilauf, bevorzugt ist auch Tretkurbel und/oder mindestens ein Kettenblatt Teil des Montagesets.

Durch den Kettenblattadapter sind verschiedene Kettenblätter montierbar und über einen Freilauf von der Tretkurbel getrennt. Somit können verschiedene Kettenblätter montiert werden oder z.B. die vorhandenen Kettenblätter des Fahrrads verwendet werden. Durch den Freilauf wird ein Betriebsmodus unterstützt, in dem ohne Pedalieren nur mit Motorantrieb gefahren wird. Durch den Kettenblattadapter ist auch eine kostengünstige Produktion möglich. Der Freilauf ist wegen der hohen Kräfte bevorzugt aus teurem Edelstahl. Durch den Adapter können der Adapter selbst und auch die Kettenblätter aus günstigeren und auch leichteren Materialien wie z. B. Alu vorgesehen werden. Eine Herstellung eines Freilaufs mit integral angebrachtem Kettenblattadapter bedarf eines höheren Materialaufwand von teurem Material, der insbesondere durch den anfallenden verschnitt noch weiter erhöht wird. Daher führt diese Lösung zu hoher Flexibilität, geringem Gewicht und kostengünstiger Produktion.

Alternativ ist jedoch trotz der Nachteile auch bevorzugt ein Kettenblattadapter mit integral angebrachtem Freilauf Teil des Montagesets, z. B. wenn aus Gründen der einfacheren Zulieferung bei der Produktion diese Variante bevorzugt wird.

In einem weiteren erfindungsgemäßen Montageset weist das Montageset zusätzlich eine Kettenführungsscheibe (59) auf, welche im eingebauten Zustand zwischen dem mindestens einen Kettenblatt (27, 28) und dem Motorkettenblatt (5) angeordnet ist und die Antriebskette zum Hinterrad und die Antriebskette zum Motor (2) sicher voneinander räumlich trennt.

Die Kettenführungsscheibe weist bevorzugt einen größeren Durchmesser als die vorhandenen Kettenblätter auf. Durch diese Scheibe wird verhindert, dass die Antriebskette zum Hinterrad auf das Motorkettenblatt läuft und dass die Antriebskette zum Motor auf ein Kettenblatt für die Antriebskette zum Hinterrad läuft. Es wird ein Abspringen der beiden Ketten bzw. Zahnriemen verhindert.

In einem weiteren erfindungsgemäßen Montageset weist das Montageset einen Motor (2) mit einem Motorantriebsritzel (36) auf, welches über einen Freilauf in einer Drehrichtung von dem Motor (2) entkoppelt ist.

Durch die Entkopplung mittels des Freilaufs, der bevorzugt auf der Motorachse angebracht ist, ist ein Betriebsmodus möglich, in dem das Fahrrad als normales Fahrrad ohne Motor gefahren wird. Der zweite Modus ermöglicht ein Pedalieren des Fahrrades gänzlich ohne Motor (wie jedes normale Fahrrad). Als dritter Modus ist durch die Anordnung möglich, das Fahrrad im Modus Pedalieren mit Motorunterstützung zu betreiben. Die Unterstützung des Motors, ist individuell per Gasgriff regelbar. An einem Gasgriff, der bevorzugt des Montagesets ist, befindet sich eine Anzeige zur aktuell abgerufenen Leistung (z. B. in 3 Stufen).

Auf der Motorantriebswelle befindet sich bevorzugt ein Adapter mit Sicherungsbolzen und Gewinde an der Außenseite, um das Motorantriebsritzel mit Freilauf aufzunehmen.

In einem weiteren erfindungsgemäßen Montageset weist das Montageset eine Controllerhalterung (44) auf, welche an einen Lenkervorbau (46) eines Fahrrads mittels Schrauben (45) und den im Lenkervorbau (46) für die Befestigung eines Lenkerrohrs (47) über eine Klemmschelle (48) vorhandenen Gewinden befestigbar ist.

Durch die Halterung werden die vorhandenen Gewinde des Lenkervorbaus verwendet, die so zu einer stabilen Montage des Controllers am Lenkervorbau führen. Es sind daher keine Plastikklemmschellen oder Gurtsysteme notwendig, die sich üblicherweise verdrehen und nicht stabil sind. Der Controller kann auf diese Weise an einer speziellen Halterung, die mit den z.B. zwei oder z.B. vier Vorbauschrauben angeschraubt wird, am Vorbau befestigt werden.

In einem weiteren erfindungsgemäßen Montageset weist das Montageset eine über einen Steckkontakt (52) und ein Kabel (53) anschließbare Batterie (54) auf, wobei das Kabel (53) in der Länge und/oder die Batterie (54) in ihrer Form und Größe derart bemessen ist, dass die Batterie (54) während dem Fahrradfahren durch einen Fahrradfahrer in einem Rucksack (55) transportierbar ist.

Der verwendete Steckkontakt, der Batterie und Motor verbindet, ist bevorzugt verpolungssicher, wasserdicht und trennt bevorzugt die Verbindung in alle Richtungen sofort, z. B. über eine Sollbruchstelle. Kabel und Steckverbindung sind bevorzugt für Ampereströme von bis zu 50 Ampere oder mehr ausgelegt.

Die Batterie enthält bevorzugt ein Batteriemanagementsystem, das die Stromabgabe wie auch Stromzufuhr der Batterie regelt und den Anforderungen anpasst. Die Zellen des Batteriepacks werden untereinander ausbalanciert. Bevor die Batterie vollständig entladen ist, schaltet das Batteriemanagementsystem die Batterie bevorzugt zum Schutz ab, auch beim Ladevorgang wird bevorzugt der Ladevorgang abgeschaltet, sobald die Batterie vollständig geladen ist. Die Leistung der Batterie, des Motors und des Controllers sind bevorzugt aufeinander abgestimmt um maximale Leistung bei voller Kontrolle der Einzelkomponenten zu gewährleisten. Der Controller ist bevorzugt programmierbar.

Durch den Transport der Batterie im Rucksack ist ein freieres bzw. agileres Fahrverhalten des Fahrrads gegeben, da das Gewicht durch den Fahrer selbst getragen wird. Der Massenmittelpunkt wird durch den Fahrer wie bei einem nichtmotorisierten Fahrrad im Rahmendreieck nahe des Tretlagers gehalten. Zudem ist ein erhöhter Diebstahlschutz für die Batterie gegeben, da der Fahrer des Fahrrads beim Parken die Batterie schnell von dem Fahrrad über den Steckkontakt entkoppeln und mit sich mitnehmen kann.

Die Aufgabe wird auch gelöst durch ein Fahrrad an das ein Montageset gemäß einem der vorigen Ansprüche montiert ist. Das Montageset ist bevorzugt nachträglich an das Fahrrad montiert. Besonders bevorzugt ist das Montage bereits werkseitig durch den Fahrradhersteller oder -händler an dem Fahrrad montiert.

Die Erfindung soll nun beispielhaft anhand von Figuren veranschaulicht werden. Dabei zeigen
- Fig. 1: ein erfindungsgemäßes Montageset mit einem Adapter, der Befestigungslöcher aufweist, über weiche der Adapter an mindestens einer Seite des Tretlagerrohrs mittels Schrauben an einer Aufnahme befestigbar ist,
- Fig.2: eine Explosionsansicht eines erfindungsgemäßen Montagesets, aus der die Befestigung des Adapters an einer Aufnahme ersichtlich ist
- Fig.3a: Eine Explosionsansicht eines erfindungsgemäßen Montagesets, das einen Adapter aufweist, der mittels einer Klemmschelle am Unterrohr befestigbar ist.
- Fig. 3b: Eine Explosionsansicht eines erfindungsgemäßen Montagesets, das einen Adapter aufweist, der mittels mindestens eines im Unterrohr vorhandenen Gewindes sowie bevorzugt Distanzhülsen an das Unterrohr befestigbar ist,
- Fig. 4: die Einzelteile aus Fig. 2,
- Fig. 5: ein erfindungsgemäßes Montageset mit einem Adapter, der ein Verbindungsplättchen aufweist, an dem ein Kettenführungsrad befestigbar ist,
- Fig. 6a und 6b: einen Bestandteil eines erfindungsgemäßen Montagesets, das einen Kettenblattadapter aufweist
- Fig. 7: einen Bestandteil eines erfindungsgemäßen Montagesets, das eine Motorhalterung mit Montagemöglichkeit des Controllers in Explosionsansicht aufweist,
- Fig. 8: einen Bestandteil eines erfindungsgemäßen Montagesets, das eine Motorhalterung aufweist,
- Fig. 9: einen Bestandteil eines erfindungsgemäßen Montagesets, das eine Controllerhalterung für den Lenkervorbau aufweist,
- Fig. 10: ein erfindungsgemäßes Montageset, das einen Steckkontakt und ein Kabel für eine variabel positionierbare Batterie aufweist,
- Fig. 11: einen Bestandteil eines erfindungsgemäßes Montageset, das eine in einem Rucksack transportierbare Batterie aufweist,
- Fig. 12: ein erfindungsgemäßes Montageset, das eine Batteriehalterung umfasst, die an den Adapter befestigbar ist,
- Fig. 13a und Fig. 13b: einen Bestandteil eines erfindungsgemäßen Montagesets mit einer Aufnahme die nachträglich an das Fahrrad anbringbar ist,
- Fig. 14: Tretlagerhülsen für weitere Gehäusebreiten,
- Fig. 15: eine Anbindung des Adapters 1 an einer Dämpferaufnahme,
- Fig. 16: eine Anbindung des Adapters 1 am Fahrradrahmen, wobei anstatt einer Anbindung des einen Endes des Adapters 1 über das Tretlager eine Anbindung nahe des Tretlagers über eine Klemmeschelle 56 erfolgt,
- Fig. 17: eine Anbindung des Adapters 1 gemäß Fig. 16, wobei als oberer Anbindungspunkt die Dämpferaufnahme 72 verwendet wird,
- Fig. 18: eine Anbindung des Motors 3 über eine Montageplatte 68.

### KURZE BESCHREIBUNG DER ZEICHNUNGEN

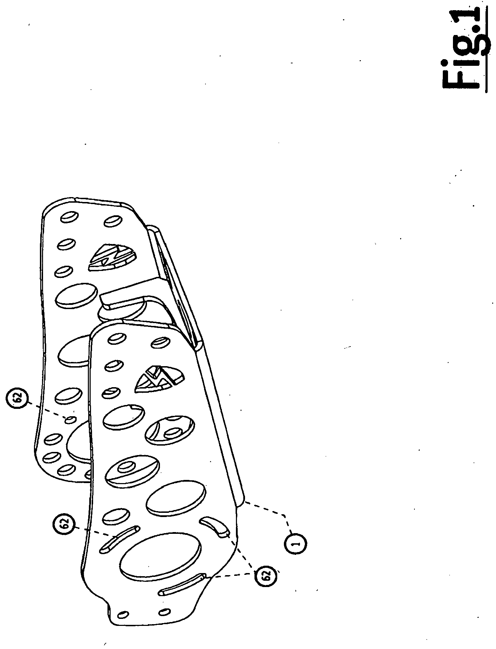

**Fig. 1** zeigt ein erfindungsgemäßes Montageset mit einem Adapter 1, der Befestigungslöcher 62 aufweist, über welche der Adapter 1 an mindestens einer Seite eines Tretlagerrohrs mittels Schrauben an einer Aufnahme befestigbar ist.

Die Befestigungslöcher 62 sind mindestens auf der einen Seite des Adapters Langlöcher. Damit ist der Adapter 1 an das Tretlagerrohr eines Fahrrads befestigbar und mit Schrauben zunächst leicht fixierbar. Sodann wird der Adapter dem Unterrohrwinkel angepasst und die Schrauben werden angezogen. Solange die Schrauben noch locker sind, ist der Adapter 1 um das Innenlager drehbar.

Auf diese Weise lässt sich der Adapter 1 mittels der Schrauben und der Befestigungslöcher 62 leicht und mit geringem Werkzeugeinsatz montieren sowie bei Bedarf auch wieder demontieren.

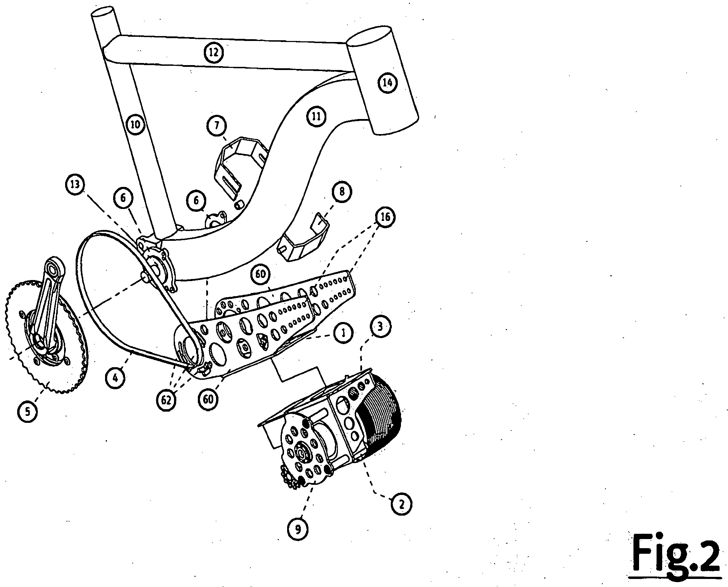

**Fig.2** zeigt eine Explosionsansicht eines erfindungsgemäßen Montagesets, aus der die Befestigung des Adapters 1 an einer Aufnahme 6 ersichtlich ist. Es ist ein Fahrradrahmenausschnitt gezeigt, der aus Sattelrohr 10, Tretlager 13, Oberrohr 12, Unterrohr 11 und Steuerrohr 14 besteht, und an den der Adapter 1 samt Motor 2 und Motorhalterung 3 sowie der Kraftübertragungseinheit Motorkette 4 und Motorkettenblatt 5 montiert ist.

Zur Befestigung des Adapters 1 wird die Aufnahme 6 an beide Seiten des Tretlagers angebracht. Ist rechtsseitig eine ISCG-Aufnahme am Fahrradrahmen vorhanden, wird der Adapter 1 an diese und an der Aufnahme 6 der linken Seite des Tretlagers angebunden.

Als dritter variabler Anbindungspunkt wird der Adapter 1 mittels einer Schelle 7, 8 an das Unterrohr des Rahmens befestigt.

Der Kettenschutz 9, der an der Motorhalterung befestigt wird, dient zur Abschirmung von äußeren Einwirkungen auf Antriebsritzel und Motorkette. Der Adapter 1 weist Langlöcher 62 im Bereich des Tretlagers auf sowie Befestigungslöcher 16 an dem Ende des Adapters, welches dem Bereich entgegengesetzt ist, an dem das Tretlager befestigt wird. Der Adapter 1 weist zwei gegenüberliegende Trägerplatten 60 auf, die durch eine Querplatte miteinander verbunden sind.

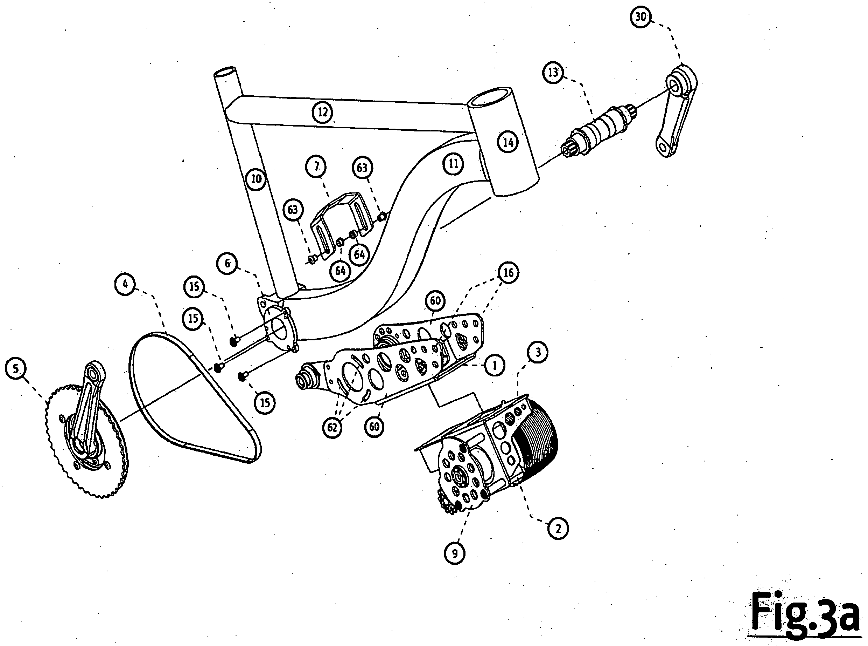

**Fig. 3a** zeigt eine Explosionsansicht eines erfindungsgemäßen Montagesets, das einen Adapter 1 aufweist, der mittels einer einteiligen Klemmschelle 7 an das Unterrohr befestigbar ist.

Die Klemmschelle 7 ist U-förmig und weist in den Schenkeln des U's jeweils ein Langloch zur Aufnahme von Schrauben 63 und Ösen 64 auf. Diese werden zugleich durch Löcher des Adapters 1 geführt. Beispielhaft sind in dieser Zeichnung als Löcher die Löcher 16 dargestellt.

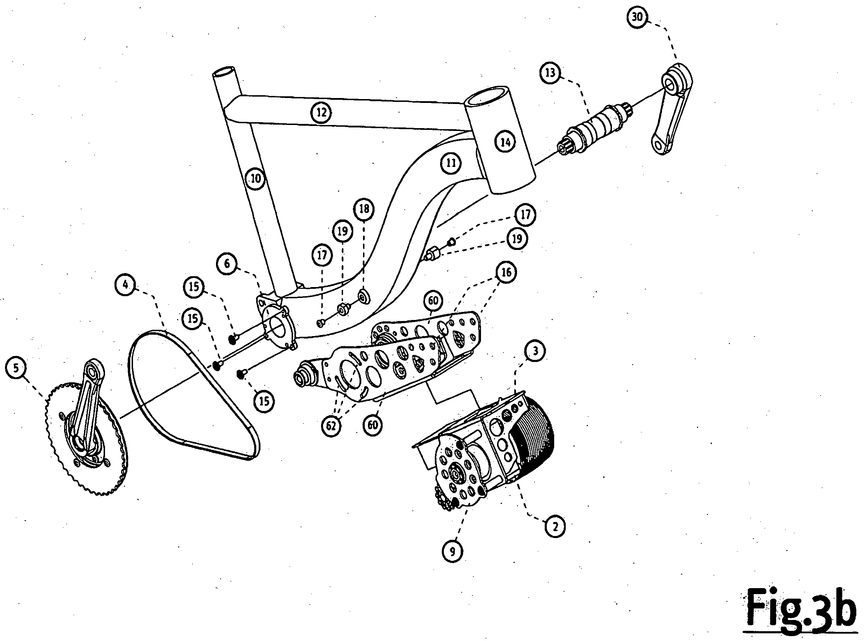

**Fig. 3b** zeigt eine Explosionsansicht eines erfindungsgemäßen Montagesets, das einen Adapter 1 aufweist, der mittels mindestens eines im Unterrohr 11 vorhandenen Gewindes 18 sowie bevorzugt Distanzhülsen 19 und Schrauben 17 an das Unterrohr 11 befestigbar ist.

Das Gewinde wurde bei der Herstellung des Rahmens bereits in das Unterrohr 11 eingebracht. Auf diese Weise ist eine noch einfachere Montage mit weniger Bauteilen möglich, die eine gleich hohe oder noch höhere Stabilität des Adapters an dem Fahrrad bewirkt. Konstruktionsbedingt sind damit höhere Kräfte auf den Rahmen übertragbar.

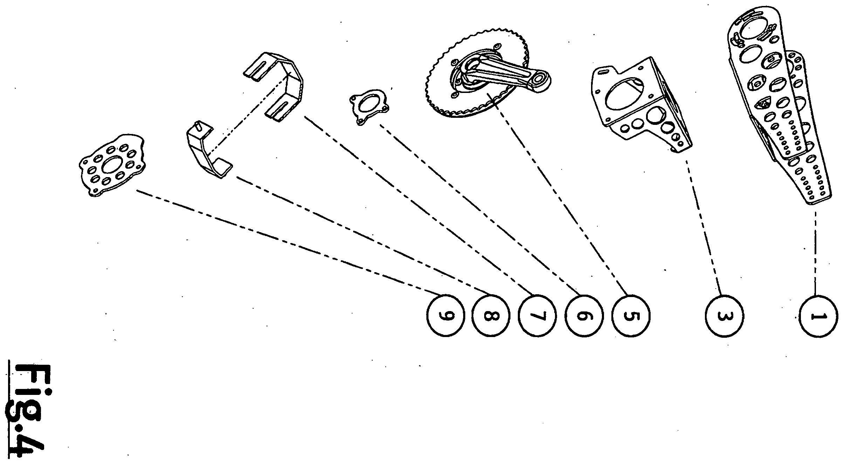

**Fig.4** zeigt die Einzelteile aus Fig. 2. Es ist eine zweiteilige Klemmschelle 7, 8 gezeigt, die jedoch auch als einteilige Klemmschelle 7, wie in Figur 3a, vorgesehen sein kann. Die Aufnahme 6 ist in diesem Fall eine an das Tretlagerrohr mit der Tretlagerhülse klemmbare Aufnahme 6 zur Simulation einer ISCG Befestigung. Auf diese Weise ist der Adapter 1 auch dann mittels Schrauben anschraubbar und wieder lösbar, wenn keine ISCG Befestigung oder eine andere Anbindung für Schrauben an dem Fahrrad vorhanden ist. Bei einer Demontage des Adapters kann dieser vollständig abgenommen werden und das Gewicht des Rads reduziert sich wieder auf den ursprünglichen Zustand. Einzig die eine angeklemmte Aufnahme wäre mit etwas höherem Aufwand demontierbar. Dies ist jedoch aufgrund des geringen Gewichts dieser Aufnahme nicht unbedingt notwendig.

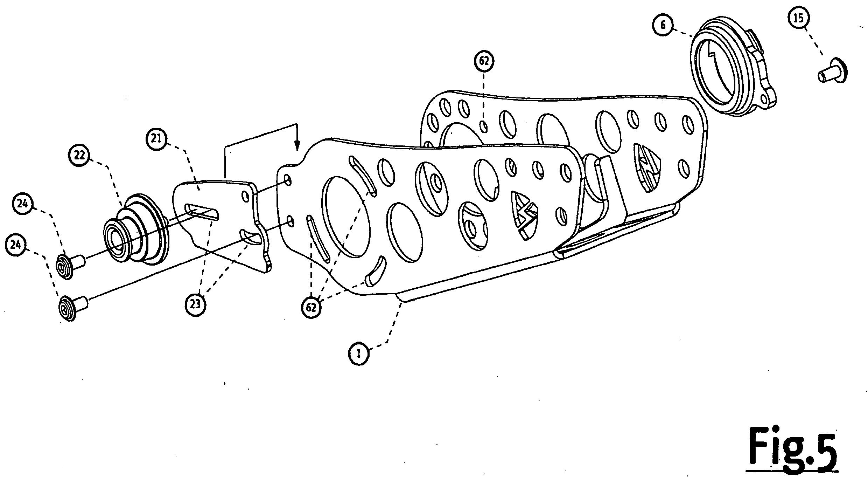

**Fig. 5** zeigt ein erfindungsgemäßes Montageset mit einem Adapter 1, der ein Verbindungsplättchen 21 aufweist, an dem ein Kettenführungsrad 22 befestigbar ist. Das Verbindungsplättchen 21 weist zwei Langlöcher 23 auf. Über diese Langlöcher 23 ist es mittels Schrauben 24 an den Adapter 1 schraubbar.

In einem der Langlöcher 23 läuft ein Kettenführungsrad 22, das bevorzugt in einer Position innerhalb des Langlochs 23 fixierbar ist. Das Verbindungsplättchen 21 ist um eine Achse aufgrund des Langlochs 23 rotierbar und somit justierbar.

Durch das Verbindungsplättchen 21 ist eine einfache aber wirksame und justierbare Halterung für ein Kettenführungsrad 22 gegeben. Dieses Kettenführungsrad 22 ermöglicht eine optimale Führung der vorhandenen Ketten. Diese Führung bewirkt, dass sich die Ketten gegenseitig nicht leicht berühren oder stören.

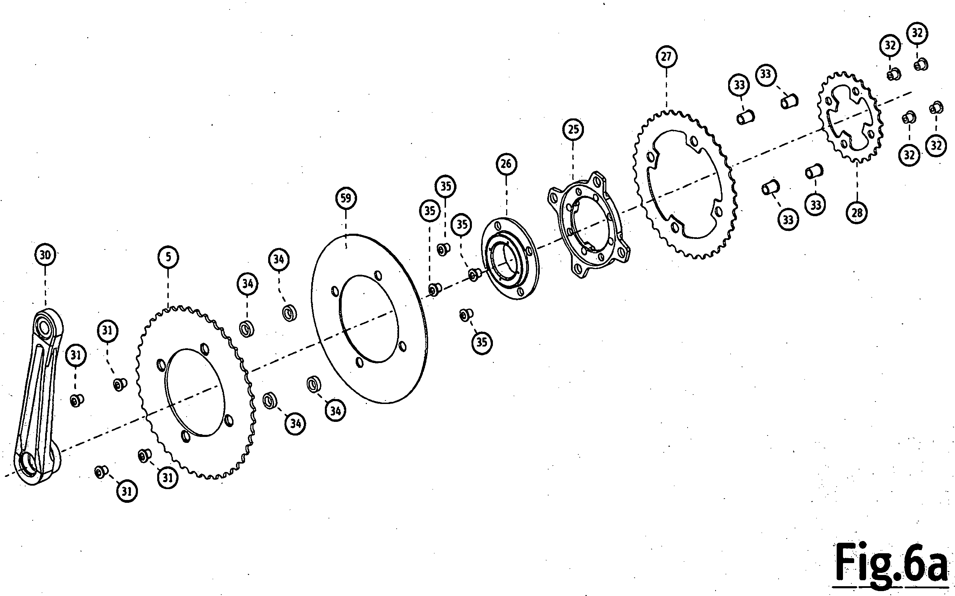

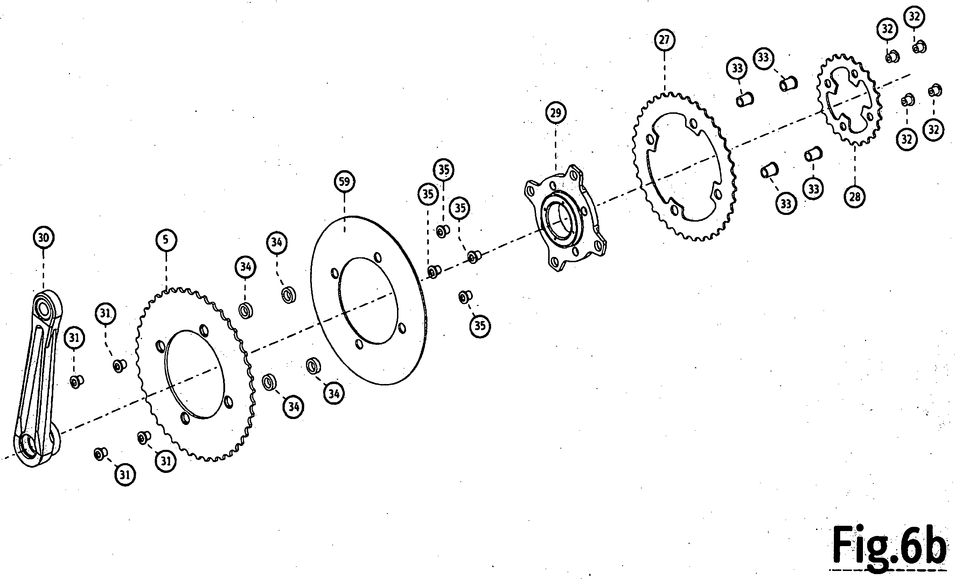

**Fig. 6a** **und** **6b** zeigen einen Bestandteil eines erfindungsgemäßen Montagesets, das einen Kettenblattadapter 25 aufweist. Der Kettenblattadapter 25 weist einen inneren Lochring mit vier (bevorzugt 3-5) Löchern und mit einem Durchmesser von 58 mm oder 64 mm auf, an dem gemäß Fig. 6a ein Freilauf 26 mit seinen vier (bevorzugt 3-5) Löchern mittels Schrauben 35 befestigbar ist. In Fig. 6b ist der Kettenblattadapter 25 integral mit dem Freilauf 26 ausgeformt und bildet somit einen Freilauf 29 mit integriertem Kettenblattadapter. Mit den äußeren vier (bevorzugt 3-5) ringförmig (Durchmesser des Rings 104 mm) angeordneten Löchern des Kettenblattadapters 25 ist mittels Gewindehülsen 33 und Schrauben 32 mindestens ein erstes Kettenblatt 27 mit 36 (bevorzugt 30-48) Zähnen und entsprechendem Lochkreis befestigbar. Weiterhin ist ein zweites Kettenblatt 28 mit 22 (bevorzugt 20-28) Zähnen und entsprechendem, im Vergleich zu dem Kettenblatt 27 kleineren Lochkreis über den inneren Lochring befestigbar. Mittels Schrauben 31 und Distanzhülsen 34 ist das Motorkettenblatt 5 mit einer dazwischen liegenden Kettenführungsscheibe 59 an dem Kettenblattadapter 25 montierbar. Die Tretkurbel 30 wird in den Freilauf 26 geschraubt. Bevorzugt ist ein solch komplettes Kurbelset Teil des Montagesets.

Aufgrund dieses Kettenblattadapters sind vorhandene Kettenblätter nutzbar und um das Motorkettenblatt 5 erweiterbar, wobei auch ein Kettenführungsblatt 59 dazwischenschaltbar ist. Durch die Integration eines Freilaufs mit Hilfe des Kettenblattadapters 25 sind die verschiedenen Betriebsmodi des Elektrofahrrads möglich. Die bisherigen Gänge des Fahrrads sind damit weiterhin wie gewohnt nutzbar. Jeder Gang ist vom Elektromotor individuell per Gasgriff unterstützbar. Somit sind steile Berg auf Passagen genauso wie hohes Tempo möglich. Durch das im Motor integrierte Planetengetriebe (Untersetzungsgetriebe) hat der Motor besonders viel Drehmoment.

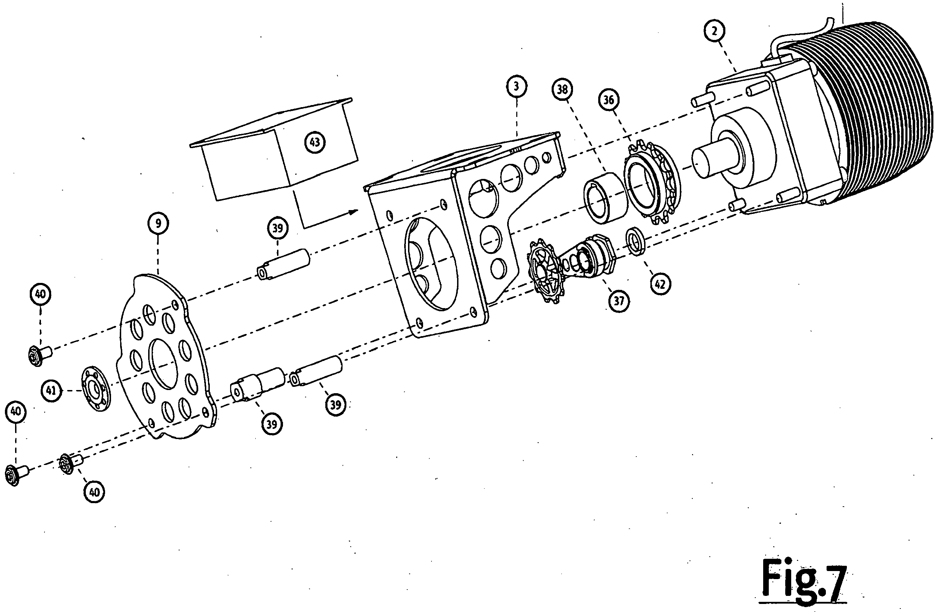

**Fig. 7** zeigt einen Bestandteil eines erfindungsgemäßen Montagesets, das eine Motorhalterung (3) in Explosionsansicht aufweist. Der Motor weist Kühlrippen in Längsrichtung (Fahrtrichtung) für eine gute Durchströmung und Wärmeabfuhr auf. Das Motorantriebsritzel 36 weist einen integrierten Freilauf auf und ist mit Hilfe einer Motorritzeladapterhülse 38, die an der Außenseite mit einem Gewinde zur Fixierung des Motorritzels 36 versehen ist, auf der Motorachse aufgebracht und durch einen Splint fixiert. Ein Motorkettenspanner 37 ist mittels einer Distanzscheibe 42 an dem Motor über einen dafür vorgesehenen Stift gehaltert. Über Distanzstifte 39 ist ein Kettenabdeckblech 9 von der Motorhalterung 3 beabstandet angeordnet und mit Schrauben 40 fixiert. Eine Freilauffixierung. 41 schließt die Motorachse ab und fixiert die Motorritzeladapterhülse 38 mit darauf befindlichem Motorantriebsritzel 36. An der Motorhalterung 3 ist zudem ein Motorcontroller 43 angeordnet.

Auf diese Weise ist eine kompakte Antriebseinheit aus Motor, Motorhalterung, Controller auf der Motorhalterung und Motorantriebsritzel geschaffen, die an den Adapter 1 montierbar ist. Das Kettenschutzblech 9 vermindert die Währscheinlichkeit von Schmutz und mechanischer Außeneinwirkung im Bereich des Motorantriebsritzels. Der Motorkettenspanner sorgt für eine optimale Spannung der Motorantriebskette bzw. des Motorantriebszahnriemens.

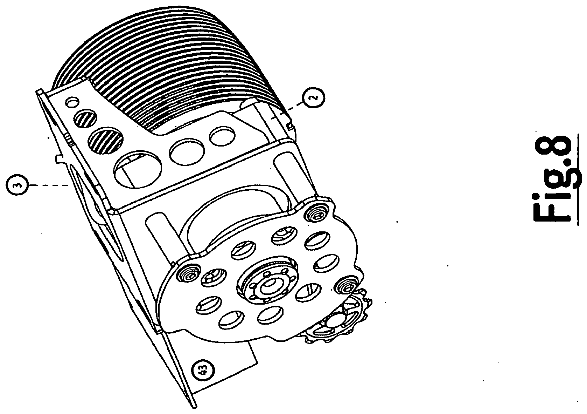

**Fig. 8** zeigt einen Bestandteil eines erfindungsgemäßen Montagesets, das eine Motorhalterung (3) aufweist. Die Elemente aus Figur 7 sind hier in zusammengebauter Form dargestellt. Der Controller 43 ist anstatt an der Motorhalterung auch an den Lenkervorbau montierbar.

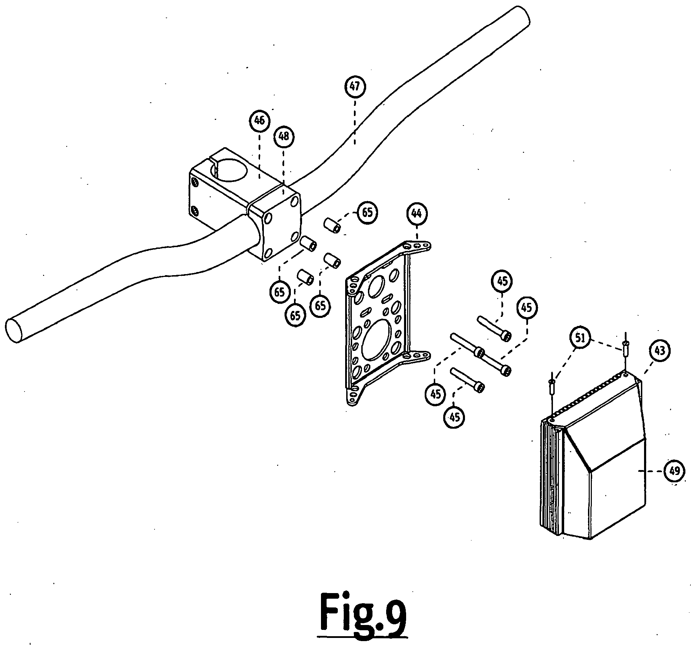

**Fig. 9** zeigt einen Bestandteil eines erfindungsgemäßen Montagesets, das eine Controllerhalterung 44 für den Lenkervorbau aufweist. Die Controllerhalterung 44 ist über Distanzhülsen 65 und mittels Schrauben 45 an der Klemmschelle 48 montiert. Die Schrauben 45 klemmen einerseits den Controllerhalter 44 wie auch das Lenkerrohr 47 über die Klemmschelle 48 an dem Lenkervorbau 46 fest. Der Controller 43 ist mittels eines Schutzblechs 49 an der Controllerhalterung befestigt. Das Schutzblech 49 weist integral oder daran anbringbare Kühlrippen zur Kühlung des Controllers 43 auf. Mittels Schrauben 51 ist das Schutzblech 49 mit der Controllerhalterung 44 verschraubt.

Auf diese Weise werden bereits vorhandene Gewinde innerhalb des Lenkervorbaus 46 genutzt, um eine stabile und sichere Verbindung des Motorcontrollers 43 in der Nähe des Lenkers 47 zu ermöglichen.

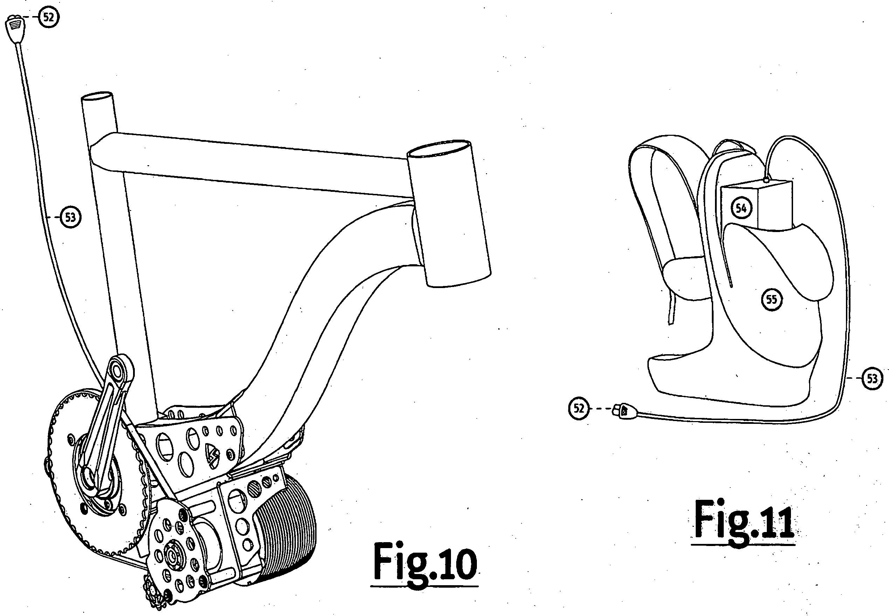

**Fig. 10** zeigt ein erfindungsgemäßes Montageset, das einen Steckkontakt 52 und ein Kabel 53 für eine variabel positionierbare Batterie 54 aufweist. Das Kabel 53 führt von dem Motor oder sofern der Controller 43 an der Motorhalterung angeordnet ist von der Motorhalterung weg und endet mit einem Steckkontakt 52.

Auf diese Weise kann die Batterie variabel je nach Wunsch des Fahrers positioniert werden (z. B. im Fahrradkorb oder auf dem Gepäckträger oder in einem Rucksack 55).

**Fig. 11** zeigt einen Bestandteil eines erfindungsgemäßen Montagesets, das eine in einem Rucksack 55 transportierbare Batterie 54 aufweist. Die Batterie 54 weist ein Kabel 53 auf, das von dieser wegführt und mit einem Steckkontakt 52 endet, der zu dem Steckkontakt 52 passt, welcher zu dem Motor bzw. dem Motorcontroller führt.

Damit ist ein Transport der Batterien 54 in einem Rucksack 55 möglich. Dies ist vorteilhaft für sehr sportliche Fahrer, die das Fahrverhalten Ihres Fahrrads nicht verändern wollen und das Gewicht der Batterie 54 daher am besten selbst auf ihrem Rücken tragen.

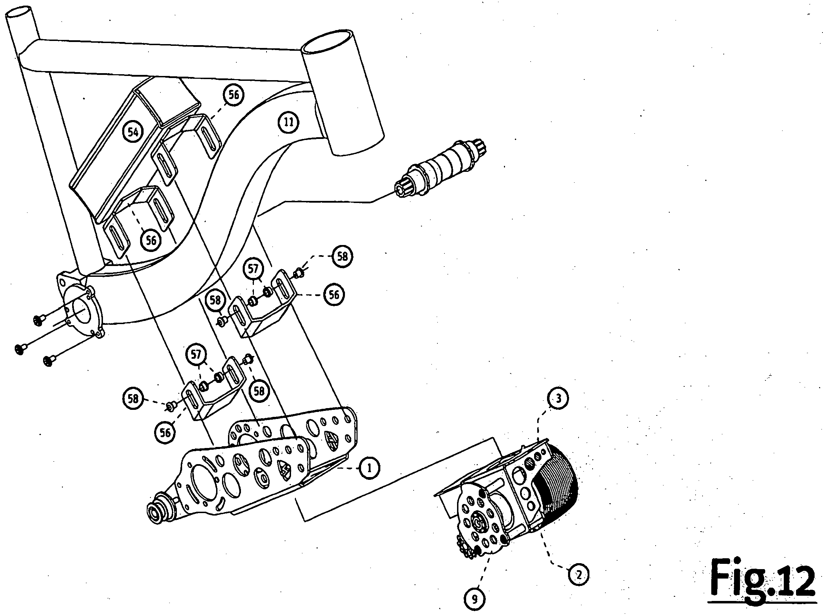

**Fig. 12** zeigt ein erfindungsgemäßes Montageset, das eine Batteriehalterung (56) umfasst, die an den Adapter (1) befestigbar ist. Die Batteriehalterung weist zwei obere und zwei untere Klemmschellen auf. Die unteren Klemmschelle umgreifen im eingebauten Zustand das Unterrohr 11 von unten und die o-beren das Unterrohr von oben. Die Klemmschellen werden mit dem Adapter 1 über Schrauben 58, Gewindehülsen 57 verbunden. Alternativ besteht die Batteriehalterung nur aus oberen Klemmschellen.

Auf diese Weise wird mit wenigen zusätzlichen Bauteilen eine Batteriehalterung im Rahmendreieck ermöglicht. Die Befestigung des Adapters am Unterrohr 11 ist somit kombiniert mit einer Befestigung einer Batteriehalterung am Unterrohr 11. Durch die Befestigung der Batteriehalterung 56 am Adapter 1 ergibt sich eine sehr stabile Verbindung der Batterie und diese kann nicht seitlich aus dem gebildeten Rahmendreieck herauskippen.

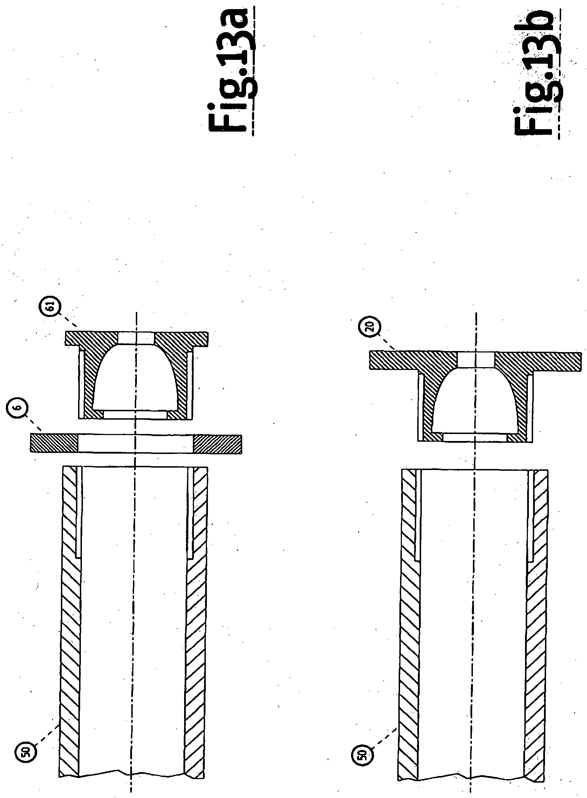

**Figur 13a** zeigt ein erfindungsgemäßes Montageset, das eine Aufnahme 6 umfasst, die über eine Tretlagerhülse 61 an das Tretlagerrohr klemmbar ist. In diesem Fall ist ein Tretlageraufbau für eine Tretlagergehäusebreite von 83 mm gezeigt. Es sind z. B auch Tretlagerhülsen 61 für Gehäusebreiten von 73 mm oder 68 mm möglich. Die Tretlagerhülse 61 weist eine Schulter auf, die im eingeschraubten Zustand noch aus dem Tretlagerrohr 50 herausragt. Zwischen dieser Schulter und dem Tretlagerrohr 50 wird die Aufnahme 6 eingeklemmt.

Auf diese Weise ist ein Fahrrad, das keine Aufnahme für den Adapter 1 zur Schraubbefestigung am Rahmen aufweist, mit einer solchen Aufnahme nachrüstbar.

**Figur 13b** zeigt eine Aufnahme 6, die ein integraler Bestandteil einer Tretlagerhülse 61 ist und eine Tretlagerhülse 20 mit integrierter Aufnahme 6 bildet. An diese Tretlagerhülse 20 mit integrierter Aufnahme 6 ist dann der Adapter anschraubbar.

Auch auf diese Weise ist für ein Fahrrad, das keine Aufnahme für den Adapter 1 aufweist, eine Nachrüstungsmöglichkeit durch die Aufnahme 6, die Bestandteil einer Tretlagerhülse 20 ist, gegeben.

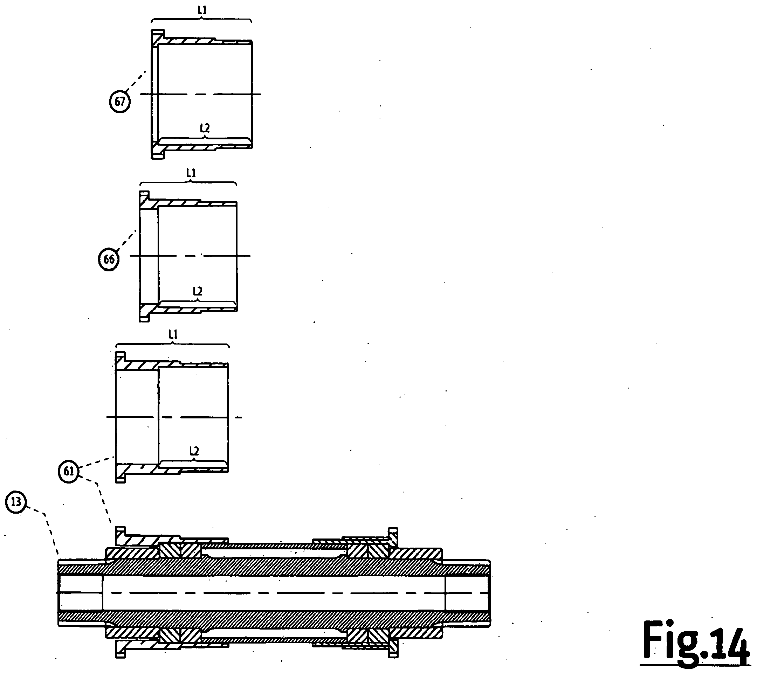

**Fig. 14** zeigt Tretlagerhülsen für weitere Gehäusebreiten, nämlich 73 mm (Tretlagerhülse 66) und 68 mm (Tretlagerhülse 67) sowie ein Tretlager 13. Die Tretlagerhülsen 61, 66 und 67 weisen jeweils unterschiedliche Längen L1 und L2 auf. L1 ist dabei die Gesamtlänge der Innenlagerhülse und L2 ist die Länge des Bereichs der Innenlagerhülse mit einem ersten Innendurchmesser, der an einen Bereich der Innenlagerhülse mit einem zweiten Innendurchmesser angrenzt, wobei der erste Innendurchmesser größer als der zweite Innendurchmesser ist. Der Bereich mit dem zweiten Innendurchmesser verhindert eine seitliche Bewegung eines Innenlagerkörpers im Innenlagerrohr.

Bisher wurden im Stand der Technik für 68 mm ,73 mm und 83 mm Tretlagergehäusebreite verschiedene Innenlagerkörper verwendet. Durch die in Ihrer Länge L1 und L2 unterschiedlichen Innenlagerhülsen bzw. Innenlagermontagehülsen ist es möglich, einen einzigen Innenlagerkörper für alle drei Gehäusebreiten zu verwenden. Dabei bleibt bevorzugt die rechte Innenlagerhülse gleich. Auf der linken Seite gibt es drei verschiedene Tretlagerhülsen für die Anpassung auf 68, 73 und 83 mm Gehäusebreite.

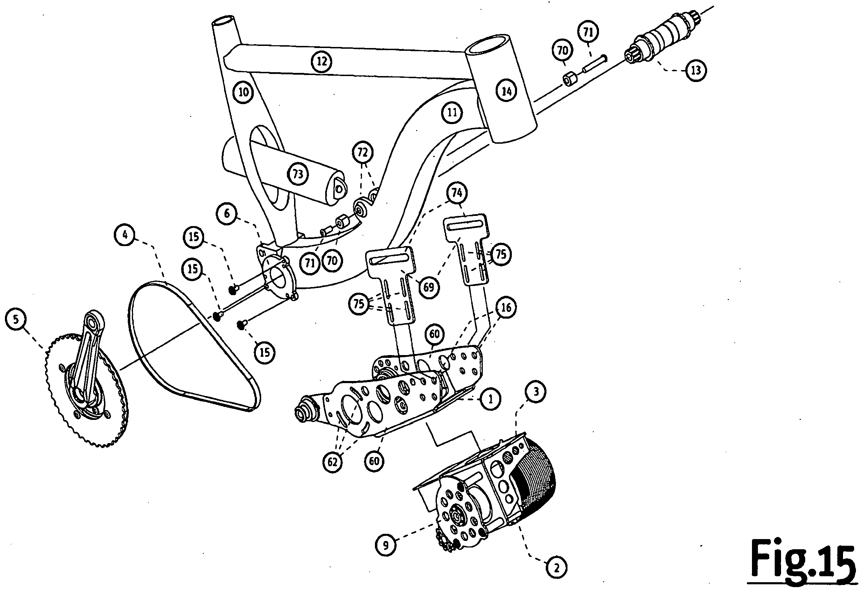

**Fig. 15** zeigt eine Anbindung des Adapters 1 an einer Dämpferaufnahme. Die Verbindung des Adapters 1 an die Dämpferaufnahme 72 ist durch zwei Lochbleche 69, die an den Adapter geschraubt sind, realisiert. Ein Lochblech 69 weist mindestens ein vertikales Langloch 75 und mindestens ein horizontales Langloch 74 auf. In einer alternativen Variante (nicht gezeichnet) ist an einem Ende des Adapters 1 eine Ausbuchtung ausgeformt, die mindestens ein Loch aufweist um den Adapter 1 dort anstatt über das Lochblech 69 direkt mit der Dämpferaufnahme 72 mit einer Dämpferschraube 71 zu verschrauben. Die vordere Dämpferaufnahme 72 befindet sich z.B. bei abfahrtsorientierten, vollgefederten Fahrrädern am Unterrohr und nimmt den Dämpfer 73 auf.

Die Dämpferaufnahme 72 ist dafür ausgelegt, größere Kräfte aufzunehmen und ist daher in der Lage, die Motorkräfte entsprechend auf den Rahmen zu übertragen ohne die Dauerhaltbarkeit des Rahmens negativ zu beeinflussen. Es handelt sich hierbei um einen sehr stabilen Montagepunkt. Vier vertikale Langlöcher 75 ermöglichen die Montage des Lochblechs 69 am Adapter 1. Mit Hilfe des horizontalen Langlochs 74 ist eine stabile Anbindung an die Dämpferaufnahme 72 möglich. Um verschieden breite Dämpferaufnahmen am Rahmen auszugleichen werden Distanzhülsen 70 verwendet.

Auf diese Weise wird ein am Fahrrad eventuell schon vorhandener, sehr stabiler Befestigungspunkt verwendbar.

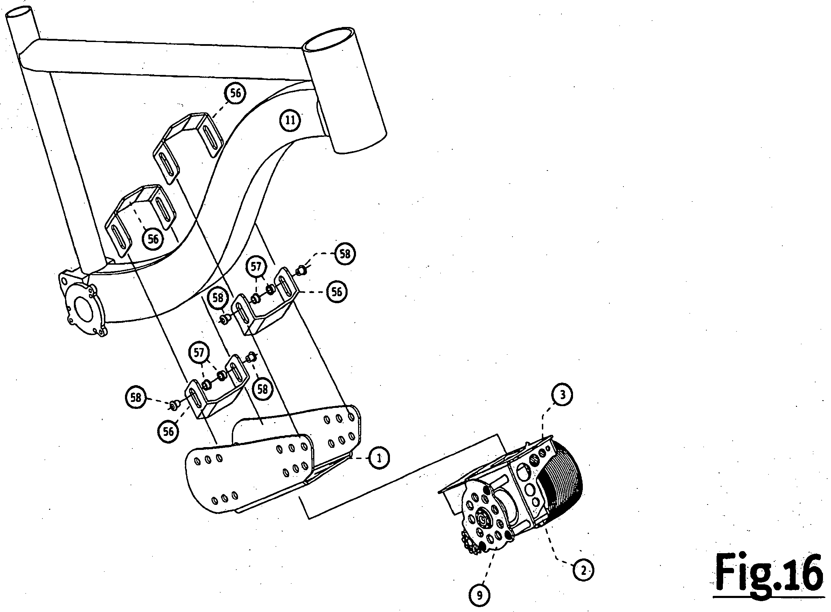

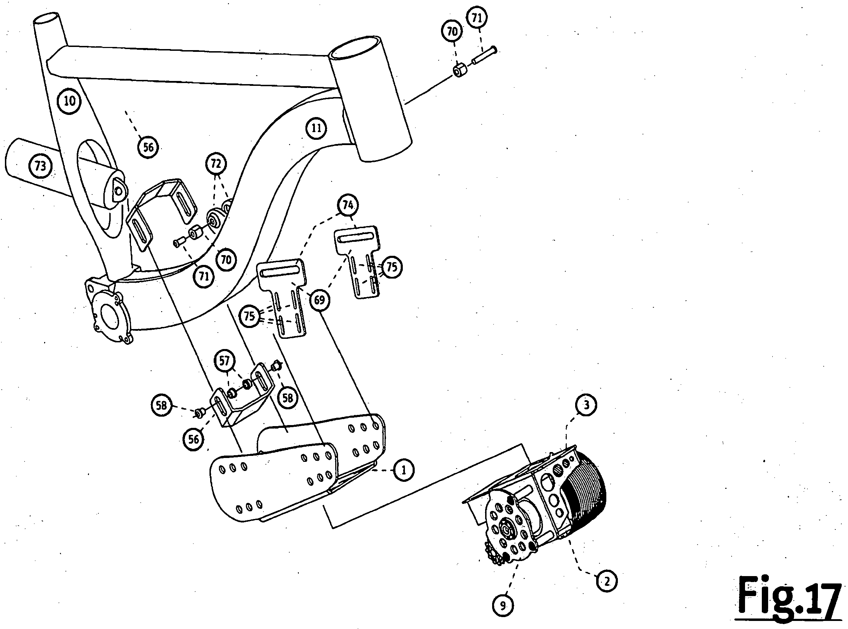

**Fig. 16** zeigt eine Anbindung des Adapters 1 am Fahrradrahmen, wobei anstatt einer Anbindung des einen Endes des Adapters 1 über das Tretlager eine Anbindung nahe des Tretlagers über eine Klemmeschelle 56 erfolgt. Die Klemmschelle 56 ist über Befestigungslöcher an dem einen Ende des Adapters an diesen mit Schrauben 58 anbringnbar. Als Anbindungspunkt für das andere Ende des Adapters 1 ist entweder eine weitere Klemmschelle 56 (hier gezeigt), ein quer im Unterrohr 11 angeordnetes Gewinde 18 oder, wie in **Fig. 17** gezeigt, eine Anbindung an eine vorhandene Dämpferaufnahme 72 (über eine Ausbuchtung des Adapters 1 oder ein Lochblech 69) möglich.

Besonders bevorzugt ist die Anbindung an die Dämpferaufnahme 72, da dieser Anbindungspunkt sehr stabil ist. Auf diese Weise ist aufgrund der Anbindung an einer Dämpferaufnahme ein seitliches Verkippen des Adapters 1 verhindert und es reicht aus, den Adapter 1 über eine oder mehrere Klemmschellen 56 zusätzlich am Unterrohr 11 zu befestigen. Hierdurch ist eine sehr hohe Flexibilität des An- und Abbaus gegeben.

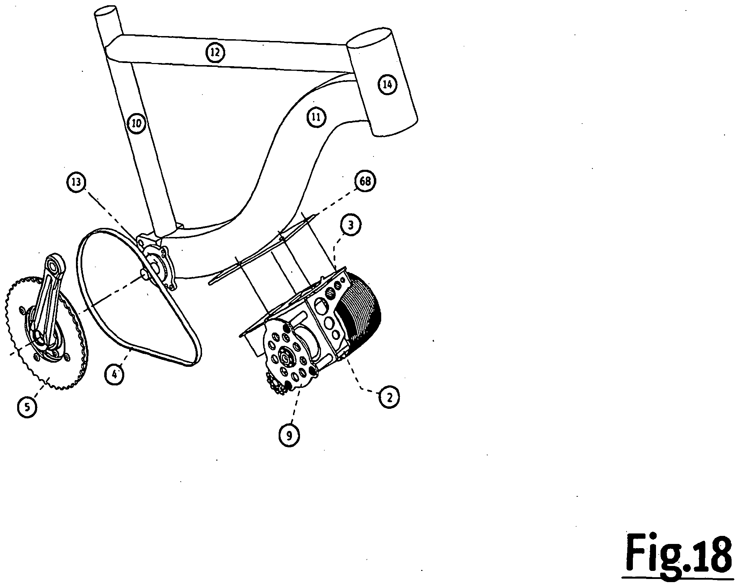

**Fig. 18** zeigt eine Anbindung des Motors 3 über eine Montageplatte 68. Der Adapter 1 entspricht hier der Montageplatte 68, die direkt am Unterrohr 11 angeschraubt oder angeschweißt ist. Sie weist bevorzugt Gewinde auf. Bevorzugt weist der Rahmen bereits ab Werk diese Montageplatte 68 auf.

Die Motorhalterung 2 mit Motor 3 wird alternativ direkt an den Rahmen geschraubt, wobei der Rahmen hierfür mindestens zwei, bevorzugt drei oder mehr Anschraubpunkte aufweist.

Alternativ ist die Motorhalterung 2 direkt am Rahmen, bevorzugt am Unterrohr 11 integriert oder angeschweißt und der Motor 3 ist durch Anschrauben an die Motorhalterung 2 an das Fahrrad montierbar.

Die technische Neuerung dieser Erfindung liegt in der recht einfachen, variablen und nachträglichen Anbindung von Elektromotoren an nahezu jeden Fahrradrahmen. Sie ermöglicht es, bereits vorhandene Anbindungspunkte so einzusetzen, dass die Aufnahme des Elektromotors ein Einfaches ist, und durchaus vom technisch versierten Laien durchführbar sein kann. Dabei erlaubt sie einen kraftschlüssigen Antrieb.

Die variable Motorhalterung bietet die Möglichkeit zur Einstellung der Kettenlinie und der Kettenspannung.

Der durch den Motor erzeugte Vortrieb wird direkt auf das Kettenblatt übertragen, das durch einen Freilauf von der durch Muskelkraft betriebenen Antriebseinheit entkoppelt ist.

ISCG steht für International Standard Chainguard Mount, d.h. internationale standardisierte Kettenschutzaufnahme, und stellt eine internationale Norm dar, die in der Fahrradindustrie die Anbindungspunkte für einen speziellen Kettenschutz definiert.

Mit dieser Erfindung wurde erstmals eine Möglichkeit geschaffen, ein Fahrrad mit einfachem Werkzeug durch einfaches Anschrauben eines Adapters und eines daran befestigbaren Motorhalters mit Motor in ein Elektrofahrrad umzuwandeln. Das Fahrrad ist trotzdem wieder in ein normales Fahrrad zurückwandelbar, ohne das größere Arbeiten mit Spezialwerkzeug durchzuführen sind. Einerseits werden vorhandene Aufnahmen, die das Fahrrad schon aufweist, genutzt wie z. B. eine ISCG Kettenschutzaufnahme. Andererseits können Aufnahmen durch spezielle Aufnahmen, die dem Montageset beiliegen und die entweder mit der Tretlagerhülse an das Tretlagerrohr geklemmt werden oder die bereits eine Tretlagerhülse darstellen am Fahrrad nachgerüstet werden. Dieser Schritt ist einmal notwendig, wenn das Fahrrad keine ISCG Aufnahme aufweist. Die flexible Montage und Demontage des Adapters ist dann jedoch wiederum allein durch Schrauben möglich.

Die Erfindung betrifft einen Adapter (1), der an drei variablen Anbindungspunkten (6, 7, 8) nahezu an jeden Fahrzeugrahmen, vornehmlich Fahrräder, angebracht wird und eine Antriebseinheit (Motor), aufnimmt, wobei eine Aufnahme (6) an der rechten Seite des Tretlagers (13) entweder durch die Tretlagerhülse an das Tretlagerrohr geklemmt oder durch die ISCG-Aufnahme direkt an diese geschraubt wird (Fig. 1).

Die Erfindung betrifft ferner eine Ausführungsform eines Adapter (1), zur Montage an einspurigen und mehrspurigen Fahrrädern, der eine Antriebseinheit (Motor, bzw. Motorhalterung mit Motor) aufnimmt, dadurch gekennzeichnet, dass eine Montage an Fahrradrahmen an drei oder mehr Anbindungspunkten, durch eine Vielzahl unterschiedlicher Löcher des Adapters, möglich ist.

Die Erfindung betrifft ferner die Ausführungsform eines Adapters, dadurch gekennzeichnet, dass dieser an der rechten Seite des Tretlagers (13) entweder durch die Tretlagerhülse an das Tretlagerrohr geklemmt oder direkt an eine Aufnahme (6), insbesondere einer ISCG-Aufnahme, geschraubt wird.

Die Erfindung betrifft ferner die Ausführungsform eines Adapters, dadurch gekennzeichnet, dass die Aufnahme (6) an der linken Seite des Tretlagers (13) durch die Tretlagerhülse an das Tretlagerrohr geklemmt wird.

Die Erfindung betrifft ferner die Ausführungsform eines Adapters, dadurch gekennzeichnet, dass er durch eine Schelle (7, 8), als dritter variabler Anbindungspunkt an das Unterrohr des Rahmens angebunden wird.

Die Erfindung betrifft ferner die Ausführungsform eines Adapters, der dadurch gekennzeichnet ist, dass die Motorhalterung (3) variabel am Hauptadapter befestigt ist.

### BEZUGSZEICHENLISTE

- 1: Adapter
- 2: Motor
- 3: Motorhalterung
- 4: Kraftübertragungseinheit Motorkette
- 5: Motorkettenblatt
- 6: Aufnahme
- 7: Anbindung an Unterrohr / Klemmschelle
- 8: Anbindung an Unterrohr / Klemmschelle
- 9: Kettenschutz
- 10: Sattelrohr
- 11: Unterrohr
- 12: Oberrohr
- 13: Tretlager
- 14: Steuerrohr
- 15: Schraube
- 16: Löcher
- 17: Schraube
- 18: Gewinde
- 19: Distanzhülsen
- 20: Tretlagerhülse mit integrierter Aufnahme 6
- 21: Verbindungsplättchen für ein Kettenführungsrad
- 22: Kettenführungsrad
- 23: Langloch
- 24: Schraube
- 25: Kettenblattadapter
- 26: Freilauf
- 27: Kettenblatt
- 28: Kettenblatt
- 29: Freilauf mit integriertem Kettenblattadapter
- 30: Tretkurbel
- 31: Schraube
- 32: Schraube
- 33: Gewindehülse
- 34: Distanzring
- 35: Schraube
- 36: Motorantriebsritzel
- 37: Motorkettenspanner
- 38: Motorritzeladapterhülse
- 39: Distanzstifte
- 40: Schrauben
- 41: Freilauffixierung
- 42: Distanzscheibe
- 43: Motorcontroller
- 44: Controllerhalterung
- 45: Schrauben
- 46: Lenkervorbau
- 47: Lenkerrohr
- 48: Klemmschelle
- 49: Schutzblech
- 50: Tretlagerrohr
- 51: Schrauben
- 52: Steckkontakt
- 53: Kabel
- 54: Batterie
- 55: Rucksack
- 56: Batteriehalterung
- 57: Gewindehülsen
- 58: Schrauben
- 59: Kettenführungsscheibe
- 60: Trägerplatte
- 61: Tretlagerhülse
- 62: Befestigungsloch
- 63: Schraube
- 64: Hülse
- 65: Distanzhülsen
- 66: Tretlagerhülse für 73mm Tretlagergehäusebreite
- 67: Tretlägerhülse für 68mm Tretlagergehäusebreite
- 68: Montageplatte
- 69: Lochblech
- 70: Distanzhülse
- 71: Dämpferschraube
- 72: Dämpferaufnahme
- 73: Dämpfer
- 74: Langloch für Dämpferaufnahme
- 75: Langloch für Adapter

## Patentansprüche

1. Montageset zur Montage eines Elektromotors an ein einspuriges oder mehrspuriges Fahrrad, das einen Adapter (1) zur Befestigung des Elektromotors aufweist der an mindestens einer Seite eines Tretlagerrohrs und mindestens einem Punkt eines Unterrohrs befestigbar ist, wobei der Adapter (1) Befestigungslöcher (62) aufweist, über welche der Adapter (1) an mindestens einer Seite des Tretlagerrohrs mittels Schrauben an einer Aufnahme (6) befestigbar ist,
**dadurch gekennzeichnet, dass**
der Adapter (1) mindestens eine seitliche Trägerplatte (60) aufweist, die sich im eingebauten Zustand des Adapters (1) vom Tretlagerrohr seitlich entlang des Unterrohrs (11) erstreckt und an deren einen Endbereich die Befestigungslöcher (62) zur Befestigung an der Aufnahme (6) und an deren anderen Endbereich mindestens eine Befestigungsmöglichkeit für eine Befestigung am Unterrohr vorhanden sind, und
wobei der Adapter (1) eine zweite seitliche Trägerplatte (60) aufweist, die der ersten seitlichen Trägerplatte (60) gegenüberliegt, und wobei die Trägerplatten (60) ein Lochbild aufweisen, das mindestens ein gegenüberliegendes Lochpaar, bestehend aus einem Befestigungsloch (16) der einen Trägerplatte (60) und einem Befestigungsloch (16) der anderen Trägerplatte (60), aufweist,
wobei die zweite seitliche Trägerplatte (60) im eingebauten Zustand auf der anderen Seite des Tretlagers und des Unterrohrs (11) als die erste Trägerplatte (60) verläuft,
und wobei der Adapter (1) mit durch das Lochpaar geführten gegenüberliegenden Schrauben (17) an das Unterrohr (11) befestigbar ist.

2. Montageset gemäß Anspruch 1, wobei das Montageset zusätzlich mindestens eine Aufnahme (6) aufweist, wobei die Aufnahme (6) an eine Seite des Tretlagerrohrs klemmbar ist oder die Aufnahme (6) ein integraler Bestandteil einer Innenlagerhülse ist.

3. Montageset gemäß Anspruch 1 oder 2, wobei der Adapter (1) mittels mindestens eines im Unterrohr (11) vorhandenen Gewindes (18) sowie bevorzugt Distanzhülsen (19) an das Unterrohr (11) befestigbar ist.

4. Montageset gemäß einem der vorigen Ansprüche, wobei das Montageset zusätzlich eine Batteriehalterung (56) umfasst, die an den Adapter (1) befestigbar ist, wobei die Batteriehalterung (56) im befestigten Zustand zusammen mit dem Adapter (1) das Unterrohr (11) teilweise umschließt.

5. Montageset gemäß einem der vorigen Ansprüche, wobei der Adapter (1) eine Motorhalterung (3) aufweist, die über Schrauben an den Adapter (1) schnell montierbar und auch demontierbar ist.

6. Montageset gemäß Anspruch 5, wobei die Motorhalterung (3) einen Befestigungspunkt für einen Motorkettenspanner (37) aufweist.

7. Montageset gemäß einem der vorigen Ansprüche, wobei der Adapter (1) ein Verbindungsplättchen (21) aufweist, an dem ein Kettenführungsrad (22) befestigbar ist, wobei das Verbindungsplättchen (21) mindestens ein Langloch (23) aufweist, über welches das Kettenführungsrad (22) mittels mindestens einer Schraube (24) an dem Adapter (1) befestigbar und in mindestens einer Richtung justierbar ist.

8. Montageset gemäß einem der vorigen Ansprüche, wobei das Montageset einen Kettenblattadapter (25) aufweist, der an einen Freilauf (26), welcher den Kettenblattadapter (25) von einer Tretkurbel (30) in einer Drehrichtung entkoppelt, befestigbar ist und an den mindestens ein Kettenblatt (27, 28) für eine Antriebskette zu einem Hinterrad eines Fahrrads und ein Motorkettenblatt (5) für eine Antriebskette zu einem Motor (2) befestigbar sind.

9. Montageset gemäß Anspruch 8, wobei das Montageset zusätzlich eine Kettenführungsscheibe (59) aufweist, welche im eingebauten Zustand zwischen dem mindestens einen Kettenblatt (27, 28) und dem Motorkettenblatt (5) angeordnet ist und die Antriebskette zum Hinterrad und die Antriebskette zum Motor (2) sicher voneinander räumlich trennt.

10. Montageset gemäß einem der vorigen Ansprüche, wobei das Montageset einen Motor (2) mit einem Motorantriebsritzel (36) aufweist, welches über einen Freilauf in einer Drehrichtung von dem Motor (2) entkoppelt ist.

11. Montageset gemäß einem der vorigen Ansprüche, wobei das Montageset eine Controllerhalterung (44) aufweist, welche an einen Lenkervorbau (46) eines Fahrrads mittels Schrauben (45) und den im Lenkervorbau (46) für die Befestigung eines Lenkerrohrs (47) über eine Klemmschelle (48) vorhandenen Gewinden befestigbar ist.

12. Montageset gemäß einem der vorigen Ansprüche, wobei das Montageset eine über einen Steckkontakt (52) und ein Kabel (53) anschließbare Batterie (54) aufweist, wobei das Kabel (53) in der Länge und/oder die Batterie (54) in ihrer Form und Größe derart bemessen ist, dass die Batterie (54) während dem Fahrradfahren durch einen Fahrradfahrer in einem Rucksack (55) transportierbar ist.

13. Fahrrad **dadurch gekennzeichnet, dass** an das Fahrrad ein Montageset gemäß einem der vorigen Ansprüche montiert ist.

## Claims

1. Mounting kit for mounting an electric motor on a single-track or multi-track bicycle, comprising an adapter (1) for attaching the electric motor which can be attached on at least one side of a bottom bracket tube and at least one point of a down tube, wherein the adapter (1) has mounting holes (62) using which the adapter (1) can be attached with screws to a retainer (6) on at least one side of the bottom bracket tube,
**characterised in that**,
the adapter (1) has at least one lateral support plate (60) which extends sideways from the bottom bracket tube along the down tube (11) in the installed state of the adapter (1), wherein on one end regionof the support plate (60) the mounting holes (62) for attachment to the retainer (6) are present and on the other end region of the support plate (60) there is at least one attachment option for attachment to the down tube, and wherein the adapter (1) has a second lateral support plate (60) which opposes the first lateral support plate (60), and wherein the support plates (60) have a hole pattern that comprises at least one opposing pair of holes consisting of one mounting hole (16) of the one support plate (60) and one mounting hole (16) of the other support plate (60), wherein in the installed state the second lateral support plate (60) runs on the other side of the bottom bracket and the down tube (11) unlike the first support plate (60), and wherein the adapter (1) can be attached to the down tube (11) with opposing screws (17) guided through the pair of holes.

2. Mounting kit according to claim 1, wherein the mounting kit additionally has at least one retainer (6), wherein the retainer (6) can be clamped to one side of the bottom bracket tube or the retainer (6) is an integral component of an inner bearing sleeve.

3. Mounting kit according to claim 1 or 2, wherein the adapter (1) can be attached to the down tube (11) by means of at least one thread (18) present in the down tube (11) as well as preferably spacer sleeves (19).

4. Mounting kit according to one of the preceding claims, wherein the mounting kit additionally comprises a battery holder (56) which can be attached to the adapter (1), wherein the battery holder (56) together with the adapter (1) partially encloses the down tube (11) in the attached state.

5. Mounting kit according to one of the preceding claims, wherein the adapter (1) has a motor holder (3) which is quickly attachable to and also detachable from the adapter (1) by means of screws.

6. Mounting kit according to claim 5, wherein the motor holder (3) has a fixing point for a motor chain tensioner (37).

7. Mounting kit according to one of the preceding claims, wherein the adapter (1) has a small connecting plate (21) to which a chain guide wheel (22) can be attached, wherein the small connecting plate (21) has at least one slot (23) by means of which the chain guide wheel (22) can be attached to the adapter (1) by means of at least one screw (24) and which can be adjusted in at least one direction.

8. Mounting kit according to one of the preceding claims, wherein the mounting kit has a chainring adapter (25) which can be attached to a freewheel unit (26) which uncouples the chainring adapter (25) from a pedal (30) in one direction of rotation and to which at least one chainring (27, 28) for a drive chain to a rear wheel of a bicycle and a motor chainring (5) for a drive chain to a motor (2) can be attached.

9. Mounting kit according to claim 8, wherein the mounting kit additionally has a chain guide disc (59) which is arranged between the at least one chainring (27, 28) and the motor chainring (5) in the installed state and which safely and spatially separates the drive chain to the rear wheel and the drive chain to the motor (2) from each other.

10. Mounting kit according to one of the preceding claims, wherein the mounting kit has a motor (2) with a motor drive sprocket (36) which is decoupled from the motor (2) via a freewheel unit in one direction of rotation.

11. Mounting kit according to one of the preceding claims, wherein the mounting kit has a controller holder (44) which can be attached to a handlebar stem (46) of a bicycle by means of screws (45) and by means of the threads present in the handlebar stem (46) for the attachment of a handlebar tube (47) via a clamp (48).

12. Mounting kit according to one of the preceding claims, wherein the mounting kit has a battery (54) connectable via a plug-in contact (52) and a cable (53), wherein the cable (53) is dimensioned in its length and/or the battery (54) in its shape and size in such a manner that the battery (54) is transportable by a cyclist in a backpack (55) while riding the bicycle.

13. Bicycle **characterised in that** a mounting kit according to one of the preceding claims is mounted on the bicycle.

## Revendications

1. Ensemble de montage pour le montage d'un moteur électrique sur une bicyclette à une ou plusieurs voies, présentant un adaptateur (1) pour la fixation du moteur électrique, lequel peut être fixé au moins sur un côté d'une tube de pédalier et au moins un point d'un tube inférieur, l'adaptateur (1) comportant des trous de fixation (62) permettant de fixer l'adaptateur (1) sur au moins un côté du tube de pédalier à l'aide de vis sur un logement (6),
**caractérisé en ce que**
l'adaptateur (1) présente au moins une plaque de support latérale (60) qui s'étend, dans l'état monté de l'adaptateur (1), à partir du tube de pédalier latéralement le long du tube inférieur (11) et les trous de fixation (62) sont prévus dans une zone d'extrémité dudit adaptateur, pour la fixation sur le logement (6) et, à l'autre zone d'extrémité, au moins une possibilité de fixation est prévue pour une fixation sur le tube inférieur, l'adaptateur (1) présentant au moins une seconde plaque de support latérale (60) qui est opposée à la première plaque de support latérale (60), les plaques de support (60) présentent un motif de trous comprenant au moins une paire de trous opposée, composée d'un trou de fixation (16) d'une plaque de support (60) et d'un trou de fixation (16) de l'autre plaque de support (60),
la seconde plaque de support latérale (60), dans l'état monté, s'étend sur l'autre côté du pédalier et du tube inférieur (11) que la première plaque de support (60), l'adaptateur (1) peut être fixé au tube inférieur (11) à l'aide de vis (17) opposées, passant à travers la paire de trous.

2. Ensemble de montage selon la revendication 1, l'ensemble de montage comportant en outre au moins un logement (6), le logement (6) peut être bloqué sur un côté du tube de pédalier où le logement (6) est partie intégrante d'un manchon de palier interne.

3. Ensemble de montage selon les revendications 1 ou 2, l'adaptateur (1) peut être fixé au tube inférieur (11) à l'aide d'au moins un filetage (18) prévu dans le tube inférieur (11) de même que de préférence des entretoises (19).

4. Ensemble de montage selon l'une des revendications précédentes, l'ensemble de montage contenant en outre un support de batterie (56) qui peut être fixé à l'adaptateur (1), le support de batterie (56) entourant partiellement le tube inférieur (11) dans l'état fixé avec l'adaptateur (1).

5. Ensemble de montage selon l'une des revendications précédentes, l'adaptateur (1) présentant un support de moteur (3), qui peut être monté et démonté rapidement sur l'adaptateur (1) à l'aide de vis.

6. Ensemble de montage selon la revendication 5, le support de moteur (3) présentant un point de fixation pour un tendeur de chaîne de moteur (37).

7. Ensemble de montage selon l'une des revendications précédentes, l'adaptateur (1) présentant une plaquette de liaison (21) à laquelle peut être fixé un pignon de guidage de chaîne (22), la plaquette de liaison (21) présentant au moins une fente (23) permettant de fixer le pignon de guidage de chaîne (22) à l'adaptateur (1) à l'aide d' au moins une vis (24) et qui peut s'ajuster dans au moins une direction.

8. Ensemble de montage selon l'une des revendications précédentes, l'ensemble de montage présentant un adaptateur de plateau (25) pouvant être fixé à un mécanisme à roue libre (26) qui découple l'adaptateur de plateau (25) d'un pédalier (30) dans un sens de rotation et au niveau duquel peuvent être fixés au moins un plateau (27, 28) pour une chaîne d'entraînement vers une roue arrière de bicyclette et un plateau de moteur (5) pour chaîne d'entraînement avec un moteur (2).

9. Ensemble de montage selon la revendication 8, l'ensemble de montage comprenant en outre un disque de guidage de chaîne (59), qui, dans l'état monté, est disposé entre ledit au moins un plateau (27, 28) et le plateau de moteur (5) et sépare physiquement la chaîne d'entraînement vers la roue arrière et la chaîne d'entraînement vers le moteur (2) de façon sûr.

10. Ensemble de montage selon l'une des revendications précédentes, l'ensemble de montage présentant un moteur (2) avec un pignon d'entraînement de moteur (36), qui est découplé du moteur (2) par le biais d'un mécanisme à roue libre dans un sens de rotation.

11. Ensemble de montage selon l'une des revendications précédentes, l'ensemble de montage présentant un support d'unité de commande (44) qui peut être fixée au niveau d'une tige de direction (46) d'une bicyclette à l'aide de vis (45) et des filetages prévus dans la tige de direction (46) pour la fixation d'un tube de guidon (47) par un collier de serrage (48).

12. Ensemble de montage selon l'une des revendications précédentes, l'ensemble de montage présentant une batterie (54) connectable à l'aide d'une fiche (52) et d'un câble (53), le câble (53) étant une longueur telle et/ou la batterie (54) étant de forme et de taille telles, que la batterie (54) peut être transportée dans un sac à dos (55) par le conducteur pendant qu'il roule.

13. Bicyclette **caractérisée en ce qu'**un ensemble de montage selon l'une des revendications précédentes est montée sur la bicyclette.
